# EUROPÄISCHE PATENTSCHRIFT

(11) **EP 0 515 924 B1**
(45) Veröffentlichungstag und Bekanntmachung des Hinweises auf die Patenterteilung: **02.11.1995**
(21) Anmeldenummer: 92108223.6
(22) Anmeldetag: 15.05.1992
(51) Int. Cl.: F01P 5/06, F01P 3/18, F01P 11/02, B60K 11/04, F28D 1/04

(54) **Kompakte Wärmetauscher-Gebläseeinheit**
Compact heat exchanger-fan unit
Unité d'échangeur de chaleur-ventilateur compacte

(30) Priorität: 28.05.1991 DE 4117392; 08.07.1991 DE 4122512
(43) Veröffentlichungstag der Anmeldung: 02.12.1992
(73) Patentinhaber: Klöckner-Humboldt-Deutz Aktiengesellschaft, 51149 Köln (DE)
(72) Erfinder: Weitzenbürger, Hans, Dipl.-Ing., W-5000 Köln 90 (DE); Klocke, Michael, Dipl.-Ing., W-5650 Solingen 19 (DE); Roschinski, Dieter, W-5000 Köln 90 (DE)

(56) Entgegenhaltungen:
- EP-A- 0 361 358
- EP-A- 0 393 654
- WO-A-90/14242
- DE-A- 3 108 485
- DE-A- 3 643 050
- FR-A- 2 561 709
- US-A- 1 782 394
- US-A- 2 264 820
- US-A- 3 834 478
- US-A- 4 018 297
- US-A- 4 651 816
- RAILWAY GAZETTE INTERNATIONAL. Bd. 124, Nr. 18, 20. September 1968, LONDON GB Seiten 709 - 710; 'Voith cooling units for diesel-hydraulic locomotives'

## Beschreibung

Die Erfindung betrifft ein Kühlaggregat, vorzugsweise für durch flüssigkeitsgekühlte Hubkolben-Brennkraftmaschinen angetriebene Fahrzeuge, mit einem Kühlgebläse (1) und mindestens zwei Wärmetauschern, die in etwa spielfrei aneinander stoßende, übereinander oder nebeneinander angeordnete Wirkflächen mit in etwa gleichem kühlluftseitigen Strömungswiderstand aufweisen, und die einen Wärmetauscherblock (8) bilden, wobei der Wärmetauscherblock (8) und das Kühlluftgebläse (1) auf einer gemeinsamen Grundplatte (9) befestigt sind.

Bei Fahrzeugen, insbesondere Arbeitsmaschinen, wie zum Beispiel Baumaschinen oder Ackerschleppern, wird in steigendem Maße Wert auf ungehinderte Sicht auf den Fahrweg beziehungsweise die Arbeitsgeräte und das zu bearbeitende Gelände gelegt. Dazu werden möglichst kleinvolumige Antriebsaagregate mit kompakter Kühlanlage benötigt, die unter einer schmalen, flachen oder abfallenden Abdeckhaube Platz finden müssen.

So ist aus der US-A 1,782,394 ein gatttungsgemäßes Kühlaggregat, das einen in einem Wasserwärmetauscher integrierten Ladeluftkühlter aufweist, bekannt. Dieses Kühlaggregat ist als konventionelles Bauteil auf einer Grundplatte mit der Brennkraftmaschine montiert. Die Kühlluft wird dabei von einem fest mit der Brennkraftmaschine gekoppelten und von dieser angetriebenem Ventilator durch die Wärmetauscherkombination gefördert.

Aus der Zeitschritt 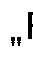 Railway Gazette International", Band 124, Nr. 18, Seiten 709 bis 710, ist eine Wärmetauscher-Gebläseeinheit für eine durch eine Brennkraftmaschine angetriebene Lok mit einem Kühlluftgebläse und mindestens einem Wärmetauscher bekannt, bei der das Kühlrad ein Leitrad aufweist.

Der Erfindung liegt die Aufgabe zugrunde, eine möglichst kompakte Kühlanlage bereitzustellen, die eine schmale und niedrige Abdeckhaube ermöglicht.

Diese Aufgabe wird dadurch gelöst, daß der Wärmetauscherblock aus Wärmetauschern aus der Gruppe eines Motorkühlflüssigkeitswärmetauschers, eines Hydraulikölwärmetauschers, eines Getriebeölwärmetauschers und eines Kraftstoffwärmetauschers gebildet ist, daß das Kühlaggregat als kompakte Einheit aus Wärmetauscherblock und dem mit einem Leitrad versehenen Kühlluftgebläse gebildet ist, und daß in Kühlluftströmungsrichtung vor dem Wärmetauscherblock mit Abstand ein Kältemittel-Wärmetauscher und/oder ein Ladeluft-Wärmetauscher auf der gemeinsamen Grundplatte befestigt ist. Durch Verwendung eines Leitrades erzielt das erfindungsgemäße Gebläse eine Förderhöhe, die eine große Tiefe des Wärmetauschernetzes und damit eine relativ kleine Wirkfläche desselben ermöglicht. Auf diese Weise wird ein kleiner Einbauraum für Wärmetauscher und Kühlluftgebläse verwirklicht, so daß bei einem Einbau in ein Fahrzeug die Verwendung einer schmalen und niedrigen Abdeckhaube möglich ist. Dazu wird die Bauhöhe der Einzelwärmetauscher für Getriebeöl, Hydrauliköl, Kraftstoff und Motorkühlflüssigkeit auf das Maß der Wärmetauscher-Gebläseeinheit gebracht. Durch das spielfreie Aneinanderstoßen der Wirkflächen dieser zusammengebauten Wärmetauscher wird Platz gespart und ein hoher Wärmetauscher-Wirkungsgrad erzielt. Die im Vergleich zum Motorkühlmittel-Wärmetauscher geringere Breite des Hydrauliköl-Wärmetauschers wird genutzt, um in dessen Ölkästen zusätzliche Wasserkästen zu integrieren, ohne die Gesamtbreite des Kühlmittel-Wärmetauschers zu überschreiten und um zugleich dessen Bauhöhe um die Höhe des Wasserkastens zu vermindern. Die erfindungsgemäße Anordnung der verschiedenen Wärmetauscher ist deren jeweiligem Temperaturniveau angepaßt. Der Kältemittelwärmetauscher mit seinem niedrigsten Temperaturniveau wird als erster durchströmt während der Motorkühlflüssigkeits-Wärmetauscher und die Hydrauliköl-Wärmetauscher sowie der Kraftstoff-Wärmetauscher mit ihrem erhöhten Temperaturniveau als letztes durchströmt werden.

Die Befestigung von Wärmetauschern und Kühlluftgebläse auf einer gemeinsamen Grundplatte bietet den Vorteil einer einfachen Vormontage der gesamten Wärmetauscher-Gebläseeinheit. Dadurch wird die Montage der gesamten Arbeitsmaschine erleichtert. Die unterschiedlichen Abstände zwischen den einzelnen Wärmetauschern und dem Kühlluftgebläse dienen der gleichmäßigen Beaufschlagung derselben mit Kühlluft und der Zugänglichkeit der Wirkflächen für Reinigungszwecke.

Eine vorteilhafte Ausbildung der Erfindung bewirkt eine gute Ausnutzung der Kühlluft, da diese durch Mehrfachnutzung maximal aufgeheizt wird. Da der Kältemittel-Wärmetauscher einen geringeren Kühlluftbedarf hat, kann hier auf eine Zwangsführung der Kühlluft und den damit verbundenen Aufwand verzichtet werden. Außerdem ist auf diese Weise und in Verbindung mit der Schlauchverbindung für das Kältemittel erfindungsgemäß eine besonders einfache Demontage und Reinigung des Kältemittel-Wärmetauscher ermöglicht.

Eine vorteilhafte Weiterbildung der Erfindung gestattet eine einfache Reinigung der Wirkfläche des Ladeluft-Wärmetauschers. Hier genügt das Lösen zweier Schrauben um den Ladeluft-Wärmetauscher nach vorne oben wegzuschwenken und einer Reinigung zugänglich zu machen. Die elastische Schlauchverbindung mit dem Ladeluft-Wärmetauscher hat nicht nur den Vorteil von dessen einfacher Demontage sondern gestattet dabei auch die Aufrechterhaltung eines druckdichten Ladeluftsystems.

Eine vorteilhafte Ausbildung der Erfindung dient der platzsparenden Unterbringung des Ausgleichsbehälters für die Motorkühlflüssigkeit nebst einem Einfüllstutzen für dieselbe.

Eine vorteilhafte Weiterbildung der Erfindung bietet große Flexibilität bezüglich des Antriebes des Kühlluftgebläses. Dadurch kann die Anordnung des Kühlluftgebläses beziehungsweise der Wärmetauscher-Kühlgebläseeinheit weitgehend frei gewählt werden.

Durch eine vorteilhafte Ausbildung der Erfindung wird eine relativ schmal bauende Abdeckhaube erreicht, da die geringe Breite des flüssigkeitsgekühlten Motors durch die Anordnung der Wärmetauscher nicht vergrößert wird und der Raum unter der Abdeckhaube und vor dem Motor optimal ausgenutzt wird.

Durch eine vorteilhafte Weiterbildung der Erfindung wird der Raum unterhalb der Abdeckhaube in einen Kühlluftzuström- und einen Kühlluftabströmbereich unterteilt, zwischen denen keinerlei Strömungskurzschluß auftritt. Diese strenge Unterteilung ist wichtig für die Effektivität der Kühlanlage.

Eine weitere vorteilhafte Ausbildung der Erfindung verbindet eine stabile, luftdichte Befestigung des starren Teils der Abdeckhaube mit der Schottwand einerseits und einer guten Zugänglichkeit der Wärmetauscher andererseits. Damit ist die bei Arbeitsmaschinen erforderliche häufige Reinigung der Wärmetauschernetze ohne größeren Aufwand ermöglicht.

Eine vorteilhafte Ausbildung der Erfindung ermöglicht großflächige Öffnungen in der Teilhaube, durch die die Kühlluft mit relativ niedriger Geschwindigkeit angesaugt wird. Dadurch bleiben die Drosselverluste und die Gefahr eines Zusetzens der seitlichen Öffnungen in Grenzen.

Weitere Merkmale der Erfindung gehen aus der nachfolgenden Beschreibung und der Zeichnung hervor, in der ein Ausführungsbeispiel schematisch dargestellt ist.

Es zeigen:
- Fig.1:: eine Seitenansicht der Wärmetauscher-Kühlgebläse einheit im Vorderteil eines Fahrzeuges eingebaut,
- Fig. 1a:: eine Seitenansicht der Wärmetauscher-Kühlgebläse einheit im Vorderteil eines Ackerschleppers eingebaut,
- Fig.2:: Detailansicht eines kombinierten Öl-/Wasserkastens des Hydraulikölkühlers.

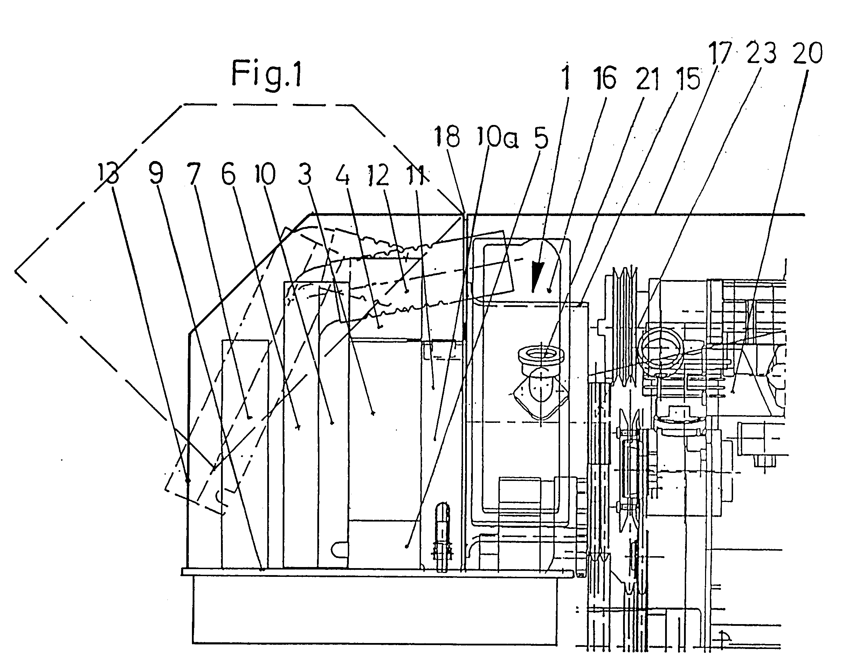

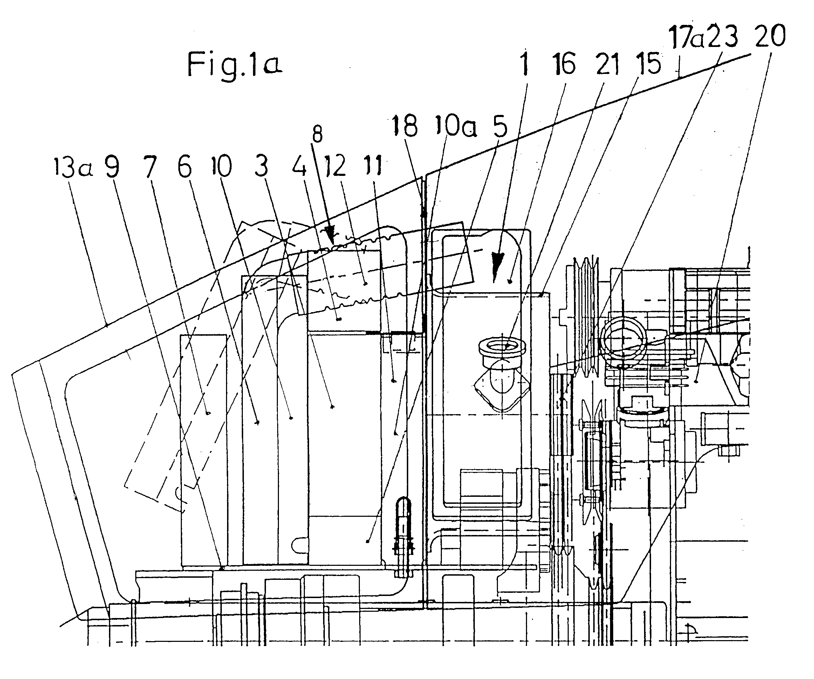

Aus Fig.1 und 1a gehen Form und Anordnung der Abdeckhaube 17 bzw. 17a mit der Teilhaube 13 bzw. 13a und den darunter befindlichen Aggregaten hervor.

Die Abdeckhaube 17 bzw. 17a ist fest mit der Schottwand 18 verschraubt, die wiederum fest an die Grundplatte 9 angeschraubt ist. Die Grundplatte 9 ist mit dem Achsbock der Schleppervorderachse fest verbunden. Auf der Grundplatte 9 sind der Wärmetauscherblock 8, der Ladeluft-Wärmetauscher 6 und der Kältemittel-Wärmetauscher 7 fest verschraubt. Der Kältemittel-Wärmetauscher 7 ist über Schläuche mit dem Kältemittelkreislauf verbunden, so daß er nach Lösen der Befestigungsschrauben ohne Demontage der Anschlüsse problemlos gereinigt werden kann. Er ist in Kühlluftströmungsrichtung gesehen an erster Stelle plaziert, da das Temperaturniveau des Kältemittels am niedrigsten ist und deshalb die nicht aufgeheizte Kühlluft zu seiner Kühlung erforderlich ist. Seine geringe Bauhöhe ermöglicht die abfallende Kontur der Teilhaube 13 bzw. 13a. Sein Abstand zum dahinter liegenden Ladeluft-Wärmetauscher 6 ist gering. Trotzdem ist dessen Beaufschlagung gleichmäßig, da eine Kühlluftführung zwischen Kältemittel-Wärmetauscher 7 und Ladeluft-Wärmetauscher 6 fehlt. Auf diese Weise kann die Kühlluft auch von der Seite und von oben in den Spalt zwischen Ladeluft-Wärmetauscher 6 und Kältemittel-Wärmetauscher 7 strömen. Der Ladeluft-Wärmetauscher 6 wird durch die nur wenig aufgeheizte Kühlluft des KältemittelWärmetauschers 7 auf das erwünschte niedrige Temperaturniveau gebracht.

Der Ladeluft-Wärmetauscher 6 besitzt eine größere Bauhöhe als der Kältemittel-Wärmetauscher 7 wodurch die Kontur der Teilhaube 13 ansteigen muß. Der Ladeluft-Wärmetauscher 6 ist zu Wartungszwecken nach vorne oben schwenkbar, wie gestrichelt angedeutet. Zum Schwenken brauchen die Ladeluftanschlüsse nicht gelöst zu werden, da es sich hierbei um elastische Schlauchelemente 12 handelt. Der Zwischenraum zwischen dem Ladeluft-Wärmetauscher 6 und dem Wärmetauscherblock 8 ist durch eine Kühlluftführung 10 auf beiden Seiten und oben hermetisch abgedichtet. Auf diese Weise wird die gesamte Kühlluft des Ladeluft-Wärmetauschers 6 dem nachfolgenden Wärmetauscherblock 8 zugeführt. Der Abstand zwischen Ladeluft-Wärmetauscher 6 und Wärmetauscherblock 8 ist so gewählt, daß der Wärmetauscherblock 8 gleichmäßig mit Kühlluft beaufschlagt wird.

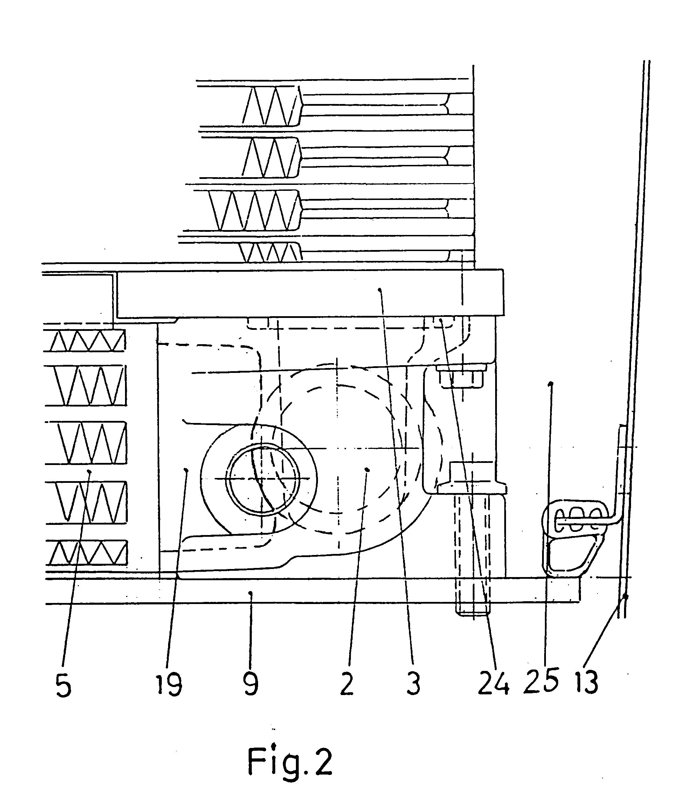

Der Wärmetauscherblock 8 besteht aus dem oberen Getriebeöl-Wärmetauscher 4, dem darunterliegenden Motorkühlmittel-Wärmetauscher 3 und dem darunter liegenden Hydrauliköl-Wärmetauscher 5. Alle drei Wärmetauscher sind miteinander verschraubt und besitzen die gleiche Tiefe. Die Gesamthöhe des Wärmetauscherblocks 8 bestimmt wiederum die Kontur der Teilhaube 13 bzw. 13a. Die Breite des Getriebeöl-Wärmetauschers 4 und des Hydrauliköl-Wärmetauschers 5 ist geringer als die des Motorkühlflüssigkeits-Wärmetauschers 3. Der daraus sich ergebene Raum wird beim Getriebeöl-Wärmetauscher 4 zum Vorbeiführen der elastischen Schlauchelemente 12 des Ladeluft-Wärmetauschers 6 benutzt. Beim Hydrauliköl-Wärmetauscher 5 sind in dessen Ölkästen 19 jeweils ein Wasserkasten 2 integriert. Durch diesen fließt das Motorkühlmittel in den darüber liegenden Motorkühlmittel-Wärmetauscher 3, der über Dichtungen 24 mit dem Wasserkasten 2 des Hydraulikölkühlers 5 fest verschraubt ist. Auf diese Weise wird, wie aus Fig. 2 ersichtlich, die Bauhöhe des Motorölkühlmittel-Wärmetauschers 3 um die Höhe des Wasserkastens 2 vermindert.

Der Wärmetauscherblock 8 wird wegen der jeweils zwei Anschlüsse für jeden der drei Wärmetauscher zum Reinigen von deren Wirkflächen nicht demontiert. Deshalb ist der Abstand zwischen dem Wärmetauscherblock 8 und der Schottwand 18 so groß gewählt, daß ein Dampfstrahlreinigungsgerät zwischen beide eingeführt werden kann. Dieser Abstand ist durch eine Kühlluftführung 10a auf beiden Seiten und von oben hermetisch abgedichtet. Ein Teil der Kühlluftführung 10a ist als öffenbare Serviceklappe 11 ausgebildet.

Auf der anderen Seite der Schottwand 18 ist das Kühlluftgebläse 1 angeschraubt, das ebenfalls mit der Grundplatte 9 fest verbunden ist. Die Schottwand 18 ist gegenüber der Abdeckhaube 17 bzw. 17a und dem Gebläseeinlauf abgedichtet. Auf diese Weise sind der Ansaugbereich der Kühlluft und deren Abströmbereich streng getrennt, so daß ein Kühlluftkurzschluß verhindert wird.

Das Kühlluftgebläse 1 wird von der Brennkraftmaschine über Keilriemen 23 angetrieben. Es weist an seinem Mantel einen integrierten Wasserausgleichsbehälter 16 auf, der mit einem Wassereinlaufstutzen 21 versehen ist. Das Kühlluftgebläse 1 saugt die Kühlluft über seitliche und vordere Öffnungen der Teilhaube 13 beziehungsweise 13a an, fördert die Kühlluft durch den Kältemittel-Wärmetauscher 7, den Ladeluft-Wärmetauscher 6 und den Wärmetauscherblock 8 und bläst die erwärmte Kühlluft in den Motorraum unter die Abdeckhaube 17 beziehungsweise 17a. Von dort strömt die erwärmte Kühlluft seitlich entlang der Brennkraftmaschine nach hinten unten. Die beschrieben Anordnung stellt eine kompakte Kühlanlage dar, die eine schmale, flache oder abfallende Abdeckhaube ermöglicht.

## Patentansprüche

1. Kühlaggregat, vorzugsweise für durch flüssigkeitsgekühlte Hubkolben-Brennkraftmaschinen angetriebene Fahrzeuge, mit einem Kühlgebläse (1) und mindestens zwei Wärmetauschern, die in etwa spielfrei aneinander stoßende, übereinander oder nebeneinander angeordnete Wirkflächen mit in etwa gleichem kühlluftseitigen Strömungswiderstand aufweisen und die einen Wärmetauscherblock (8) bilden, wobei der Wärmetauscherblock (8) und das Kühlluftgebläse (1) auf einer gemeinsamen Grundplatte (9) befestigt sind,
*dadurch gekennzeichnet*, daß der Wärmetauscherblock (8) aus Wärmetauschern aus der Gruppe eines Motorkühlflüssigkeitswärmetauschers (3), eines Hydraulikölwärmetauschers (5), eines Getriebeölwärmetauschers (4) und eines Kraftstoffwärmetauschers (26) gebildet ist, daß das Kühlaggregat als kompakte Einheit aus Wärmetauscherblock (8) und dem mit einem Leitrad versehenen Kühlluftgebläse (1) gebildet ist, und daß in Kühlluftströmungsrichtung vor dem Wärmetauscherblock (8) mit Abstand ein Kältemittel-Wärmetauscher (7) und/oder ein Ladeluft-Wärmetauscher (6) auf der gemeinsamen Grundplatte (9) befestigt ist.

2. Kühlaggregat nach Anspruch 1,
*dadurch gekennzeichnet*, daß die Kühlluft zwischen dem Ladeluft-Wärmetauscher (6), dem Wärmetauscherblock (8) und dem Kühlgebläse (1) durch eine Kühlluftführung (10, 10a) geführt ist, die im Bereich zwischen dem Wärmetauscherblock (8) und dem Kühlluftgebläse (1) mindestens eine Serviceklappe (11) aufweist.

3. Kühlaggregat nach Anspruch 1 oder 2,,
*dadurch gekennzeichnet*, daß der kältemittelseitige Anschluß des Kältemittel-Wärmetauschers (7) und der ladeluftseitige Anschluß des Ladeluft-Wärmetauschers (6) über je zwei elastische Schlauchelemente (12) erfolgt und daß der Ladeluft-Wärmetauscher (6) nach vorne oben gegen den Kühlluftstrom und von der Grundplatte (9) weg schwenkbar ist.

4. Kühlaggregat nach einem der vorangegangenen Ansprüche,
*dadurch gekennzeichnet*, daß das Kühlluftgebläse (1) einen Kühlluftgebläsemantel (15) aufweist, in dem ein Ausgleichsbehälter (16) für die Motorkühlflüssigkeit nebst einem Einfüllstutzen (21) integriert sind.

5. Kühlaggregat nach einem der vorangegangenen Ansprüche, wobei die Brennkraftmaschine, das Kühlluftgebläse (1) und die Wärmetauscher zumindest teilweise unter einer Abdeckhaube (17, 17a) angeordnet sind,
*dadurch gekennzeichnet*, daß das Kühlluftgebläse (1) sowie die Wärmetauscher getrennnt von der Hubkolben-Brennkraftmaschine (20) und in Längsrichtung gesehen vor dieser angeordnet sind, und daß Anordnung und Form des Kühlluftgebläses (1) sowie der Wärmetauscher eine abfallende Kontur der Abdeckhaube (17, 17a) ermöglichen.

6. Kühlaggregat nach Anspruch 5,
*dadurch gekennzeichnet*, daß zwischen der Abdeckhaube (17, 17a) und der Kühlluftführung (10, 10a) ein Raum (25) vorgesehen ist, der durch eine Schottwand (18) gegenüber dem Raum der Brennkraftmaschine (20) luftdicht abgeschlossen ist.

7. Kühlaggregat nach Anspruch 6,
*dadurch gekennzeichnet*, daß die Schottwand (18) mit der Grundplatte (9), der Abdeckhaube (17, 17a) und dem Kühlluftgebläse (1) eine weitgehend dichte, starre Verbindung aufweist.

8. Kühlaggregat nach den Ansprüchen 5 bis 7,
*dadurch gekennzeichnet*, daß die Abdeckhaube (17, 17a) quer zur Kühlluftgebläseachse geteilt ist, wobei der saugseitige Teil als schwenkbare oder abnehmbare Teilhaube (13, 13a) ausgebildet ist.

9. Kühlaggregat nach Anspruch 8,
*dadurch gekennzeichnet*, daß die Teilhaube (13, 13a) zumindest seitliche Öffnungen aufweist, durch die der Raum (25) zwischen Abdeckhaube (17, 17a) und Kühlluftführung (10, 10a) mit der Umgebung in Strömungsverbindung steht.

## Claims

1. A cooling system, preferably for vehicles powered by liquid-cooled reciprocating-piston engines, comprising a cooling fan (1) and at least two heat exchangers the effective areas of which abut with virtually no play and are arranged one above the other or next to one another with an approximately equal resistance to flow on the cooling air side, the said heat exchangers forming a heat exchanger block (8) which, together with the cooling fan (1), is secured to a common baseplate (9)
characterised in that the heat exchanger block (8) comprises heat exchangers from the group of an engine coolant heat exchanger (3,) an hydraulic fluid heat exchanger (5), a transmission oil heat exchanger (4) and a fuel heat exchanger (26), that the cooling system is arranged as a compact unit comprising heat exchanger block (8) and the cooling fan provided with a stator, and that a coolant heat exchanger (7) and/or a charge-air heat exchanger (6) are mounted at a distance apart on the common baseplate (9) in front of the heat exchanger block (8) in the direction of flow of cooling air.

2. A cooling system according to claim 1
characterised in that the cooling air between the charge-air heat exchanger (6), the heat exchanger block (8) and the cooling fan (1) is guided through a cooling air guide (10, 10a) which is provided with at least one service flap (11) in the region between the heat exchanger block (8) and the cooling fan (1).

3. A cooling system according to either claim 1 or claim 2,
characterised in that the connections of the coolant heat exchanger (7) on the coolant side and the connection of the charge-air heat exchanger (6) on the charge-air side are in both cases effected through two elastic tubing elements (12) and that the charge-air heat exchanger (6) can be swivelled forwards and upwards against the flow of cooling air and away from the baseplate (9).

4. A cooling system according to any one of the preceding claims,
characterised in that the cooling fan (1) has a cooling fan jacket (15) in which an expansion reservoir (16) for the engine coolant and a filler neck (21) are integrated.

5. A cooling system according to any one of the preceding claims, with the internal combustion engine, the cooling fan (1) and the heat exchanger at least in part arranged under one bonnet or covering (17, 17a)
characterised in that the cooling fan (1) and the heat exchangers are arranged separately from the reciprocating engine (20) and in front of it when viewed in a longitudinal direction, and that the arrangement and shape of the cooling air fan (1) and the heat exchangers makes possible a downward-sloping contour of the bonnet (17, 17a).

6. A cooling system according to claim 5
characterised in that a compartment (25) is provided between the bonnet (17, 17a) and the cooling air guide (10, 10a) which is sealed in an airtight manner from the compartment of the internal combustion engine (20) by a partition plate (18).

7. A cooling system according to claim 6
characterised in that the partition plate (18) is connected to the baseplate (9), the bonnet (17, 17a) and the cooling air fan (1) in a substantially airtight and rigid manner.

8. A cooling system according to claims 5 to 7
characterised in that the bonnet (17, 17a) is partitioned transversely to the cooling fan axis, with the part on the aspiration side being in the form of a pivoted or detachable bonnet or cover section (13, 13a).

9. A cooling system according to claim 8
characterised in that the bonnet section (13, 13a) is provided with at least lateral openings through which air can flow between the environment and the compartment (25) between the bonnet or cover (17, 17a) and the cooling air guide (10, 10a).

## Revendications

1. Groupe de refroidissement, de préférence destiné à des véhicules entraînés par des moteurs à combustion interne à pistons alternatifs refroidis par un liquide, avec un ventilateur de refroidissement (1) et au moins deux échangeurs thermiques, qui comportent des surfaces actives disposées les unes sur les autres ou les unes à côté des autres butant à peu près sans jeu les unes contre les autres avec une résistance à l'écoulement sensiblement la même sur les faces de l'air de refroidissement et qui forment un bloc d'échangeurs thermiques (8), le bloc d'échangeurs thermiques (8) et le ventilateur d'air de refroidissement (1) étant fixés sur la même plaque de base (9),
caractérisé en ce que le bloc d'échangeurs thermiques (8) est constitué d'échangeurs thermiques du groupe comprenant un échangeur thermique pour le liquide de refroidissement du moteur (3), un échangeur thermique pour l'huile hydraulique (5), un échangeur thermique pour l'huile à engrenages (4) et un échangeur thermique pour le carburant (26), en ce que le groupe refroidisseur est formé comme un ensemble compact constitué du bloc d'échangeurs thermiques (8) et du ventilateur d'air de refroidissement muni d'une roue directrice, et en ce que dans le sens de l'écoulement de l'air de refroidissement à une certaine distance en avant du bloc d'échangeurs thermiques (8) est fixé sur la plaque de base commune (9) un échangeur thermique de l'agent de refroidissement (7) et/ou un échangeur thermique de l'air de charge (6).

2. Groupe de refroidissement selon la revendication 1, caractérisé en ce que l'air de refroidissement est guidé entre l'échangeur thermique de l'air de charge (6), le bloc d'échangeurs thermiques (8) et le ventilateur de refroidissement (1) à travers une conduite d'air de refroidissement (10, 10a), qui comporte dans la zone située entre le bloc d'échangeurs thermiques (8) et le ventilateur d'air de refroidissement (1) au moins un volet de service (11).

3. Groupe de refroidissement selon les revendications 1 ou 2 caractérisé en ce que le raccordement du côté agent de refroidissement de l'échangeur thermique de l'agent de refroidissement (7) et le raccordement du côté air de charge de l'échangeur thermique d'air de charge (6) a lieu par l'intermédiaire respectivement de deux éléments de tuyaux flexibles (12) et en ce que l'échangeur thermique d'air de charge (6) peut pivoter en haut en avant vers l'air de refroidissement et en s'éloignant de la plaque de base (9).

4. Groupe de refroidissement selon une des revendications précédentes, caractérisé en ce que le ventilateur d'air de refroidissement (1) comporte une enveloppe (15), dans laquelle sont intégrés un réservoir de compensation (16) pour le liquide de refroidissement du moteur avec une tubulure de remplissage (21).

5. Groupe de refroidissement selon une des revendications précédentes, dans lequel le moteur à combustion interne, le ventilateur d'air de refroidissement (1) et les échangeurs thermiques sont disposés au moins partiellement sous un capot (17, 17a), caractérisé en ce que le ventilateur d'air de refroidissement (1) ainsi que les échangeurs thermiques sont séparés du moteur à combustion interne à pistons alternatifs (20) et vus dans le sens longitudinal sont disposés en avant de celui-ci, et en ce que la mise en place et la forme du ventilateur d'air de refroidissement (1) ainsi que des échangeurs thermiques permettent un contour incliné du capot (17, 17a).

6. Groupe de refroidissement selon la revendication 5, caractérisé en ce que entre le capot (17, 17a) et la conduite d'air de refroidissement (10, 10a) est prévu un espace 25, qui est fermé et rendu étanche à l'air par une cloison (18) vis-à-vis de l'espace du moteur à combustion interne (20).

7. Groupe de refroidissement selon la revendication 6, caractérisé en ce que la paroi (18) comporte une liaison rigide, largement étanche avec la plaque de base (9), le capot (17, 17a) et le ventilateur d'air de refroidissement (1).

8. Groupe de refroidissement selon la revendication 6, caractérisé en ce que le capot (17, 17a) est divisé transversalement par rapport à l'axe du ventilateur d'air de refroidissement, la partie du côté aspiration étant réalisée comme un capot partiel (13, 13a) pouvant pivoter ou étant amovible .

9. Groupe de refroidissement selon la revendication 8, caractérisé en ce que le capot partiel (13, 13a) comporte au moins des ouvertures latérales, à travers lesquelles l'espace (25) entre le capot (17, 17a) et la conduite d'air de refroidissement est en liaison d'écoulement avec l'environnement.
